# EUROPEAN PATENT SPECIFICATION

(11) **EP 3 740 064 B1**
(45) Date of publication and mention of the grant of the patent: **13.04.2022**
(21) Application number: 19701968.0
(22) Date of filing: 17.01.2019
(51) Int. Cl.: A01J 25/12, A01J 27/04, B26D 1/00

(54) **A DEVICE FOR AND A METHOD OF CUTTING A SQUARE CHEESE BLOCK**
VORRICHTUNG UND VERFAHREN ZUM SCHNEIDEN EINES QUADRATISCHEN KÄSEBLOCKS
DISPOSITIF ET PROCÉDÉ DE COUPE D'UN BLOC CARRÉ DE FROMAGE

(30) Priority: 18.01.2018 DK PA201870032; 09.03.2018 DK PA201870150
(43) Date of publication of application: 25.11.2020
(73) Proprietor: JH Consulting V/Jørgen Henriksen, 4330 Hvalsø (DK)
(72) Inventor: HENRIKSEN, Jørgen, 4330 Hvalsø (DK)
(74) Representative: Plougmann Vingtoft a/s
(86) International application number: PCT/DK2019/050017
(87) International publication number: WO 2019/141329

(56) References cited:
- EP-A2- 1 221 361
- US-A- 3 836 688

## Description

### FIELD OF THE INVENTION

The present invention relates to methods and devices for cutting cheese blocks in containers.

### BACKGROUND OF THE INVENTION

Cast cheese such as FETA has been on the market for more than 40 years until late in the nineties all cheese was cast in metal canisters mainly with a content of 8 or 16 kilos of cheese, around 1998 came the first plants to produce the white cheese in retail containers of 250 to 500 gram.

For practical reasons, cheese cast in the larger canisters is separated in several layers. The canister, after sterilizing usually by steam spraying and internal spraying with slip spray preventing the cheese from sticking to the canister, is filled with a first layer of product and left for about 20 minutes for coagulation. Following the coagulation another layer is filled on the freshly coagulated cheese curd. Again, this product is allowed to coagulate for about 20 minutes, this procedure can be repeated until the desired number of layers are filled and coagulated in the canister. A 16-kilo canister will normally have 3 or 4 layers of cheese, resulting in a coagulation time of 60 to 80 minutes during which the canister will have to be stored in a controlled atmosphere resulting in a waste of production time and occupation of space. Following coagulation of the last layer the canister is brought to a cutting station where knives are pressed vertically through all the layers in the canister whereby the curd in the canister is divided into smaller blocks making extraction from the canister easy. US3836688 A discloses a device and method of cutting a block of cheese with circular cross section in pieces.

An improved method of horizontally separating the layers of cheese in retail containers with a non-circular cross-section, such as a square cross-section, would be advantageous to reduce process time and contamination of cheeses in containers with a non-circular cross-section.

### OBJECT OF THE INVENTION

An object of this invention is to provide an alternative to the prior art by introducing a device which will speed up the manufacturing process of making square cast cheese blocks in layers, reduce the cost of the process and minimize the risk of contamination.

### SUMMARY OF THE INVENTION

The above-described object and several other objects are intended to be obtained in a first aspect of the invention by providing a cutting device configured for horizontally cutting a block of cheese, preferably being cubic or cuboid, contained in a container being open at the top, the cutting device comprising:
- an elongate vertical shaft configured to be partly inserted into the block of cheese and being configured for rotating 360 degrees around its longitudinal axis;
- one or more horizontal extending knives extending out from the vertical shaft, configured to be fully inserted into the block of cheese and being
configured for cutting the block of cheese in one or more horizontal planes; wherein the cutting device is configured for moving and rotating the vertical shaft in at least two vertical planes within the block of cheese, thereby moving and rotating each horizontal extending knife in a horizontal plane within the block of cheese, to provide horizontal cutting of the block of cheese.

"Cutting a block of cheese" as used herein is preferably used to reference cutting cheese curd or cheese in general. Such cheese curd may be produced by introducing a product into the container and let the product coagulate into a cheese curd, alternatively cheese curd may be filled into the container. In some embodiments, a syneresis sets in after coagulation and in embodiments including addition of salt (e.g. white cheese acidified by culture), such salt addition is carried out after syneresis.

The container in the context of this invention may preferably be a square retail container or a canister being open at the top. The retail container may be designed to contain from about 250 grams to about 2000 grams of cheese and the canisters may be designed to hold large amounts of cheese, such as 8 to 16 kilos. By retail container is preferably meant a container in which the cut cheese remains in after cutting and during retailing of the cut cheese. The retail container is typically closed and sealed by a lid after cutting and before retailing. If cheese acidified by culture is produced, a membrane such as an impermeable membrane may be arranged on the top of the cut cheese and salt dosed on top of the membrane.

The block of cheese contained in the container may have a length, a width and a height. The length, width and height may be different or be the same. The block of cheese may thus not necessarily be quadratic, but may have a rectangular shape. The block of cheese may have sharp corners but may also have one or more rounded corners.

Throughout this document, for ease of reading, the terms horizontal, vertical, top, bottom, height, width, length, etc. have been used in their conventional meaning to define relative directions in relationship to a container having an opening in the top, i.e. standing up in a vertical position.

A block of cheese may be cut vertically to form cheese sections and horizontally to form cheese layers comprising the same amount of cheese sections in each layer. Preferably, the cheese sections may be of identical size. The cheese sections may be rectangular or quadratic. The height of each cheese section depends on the number and position of horizontal extending knives on the vertical shaft.

A cutting device comprising one horizontal extending knife, will produce two or more layers of cheese in one horizontal cutting. In some embodiments, the cutting device may comprise more than one horizontal extending knife, preferably between two and six horizontal extending knives, for cutting the block of cheese in more than one horizontal plane, preferably between two and six horizontal planes, to provide three to seven layers of cheese.

Preferably, the horizontal extending knives are equidistantly arranged on the vertical shaft, in a way so the cheese layers all have the same height after horizontal cutting. However, the horizontal extending knives may also be arranged in other ways, to provide cheese layers of different height.

Preferably, the one or more horizontal extending knives may be fixed on the vertical shaft, in a way so they only rotate and move when the vertical shaft rotate and move, respectively.

The at least two vertical planes wherein the vertical shaft moves during horizontal cutting of the block of cheese, with the cutting device according to the present invention, may preferably be formed during vertical cutting of the cheese.

A vertical cutting pattern herein preferably refers to the arrangement of vertical planes in the cheese block after vertical cutting have been performed. Preferably, the vertical planes may be arranged so that cheese sections of the same size are obtained after vertical cutting.

The vertical cutting may be performed in a step preceding the horizontal cutting. Preferably, the vertical cutting is performed before the horizontal cutting, so the at least two vertical planes along which the vertical shaft can move, has already been formed and the vertical shaft can move in the planes during horizontal cutting of the block of cheese.

In preferred embodiments, the cheese block is vertically cut with a cutting device different from that of the present invention, before it is horizontally cut with the cutting device of the present invention. After the vertical cutting, the cutting device of the present invention is preferably inserted from above, into one of the vertical planes obtained by the vertical cutting of the cheese, in a way so no further vertical cuttings are made by the one or more horizontal extending knives during insertion into the block of cheese. Hereafter, the horizontal cutting may be performed by movement of the vertical shaft within the two or more vertical planes formed during the vertical cutting and rotation of the vertical shaft during movement.

Preferably, the diameter of the vertical shaft is less than 2 cm, such as less than 1.5 cm. This is advantageous, to course as little damage to the cheese as possible, during movement of the vertical shaft within the vertical planes of the cheese block. Preferably, the diameter of the vertical shaft is at least 6 mm, such as at least 1 cm. In a specific preferred embodiment, the diameter of the vertical shaft is 6.5 mm.

The cross section of the vertical shaft may preferably be circular, but may also have any other polygonal form such as square, triangular or hexagonal.

Preferably, the vertical shaft have a length which is longer than the height of the block of cheese, so the vertical shaft can be fully inserted into the block of cheese with an upper end of the vertical shaft extending above the block of cheese.

In some embodiments, all the horizontal extending knives extend from the vertical shaft in a substantially identical direction. In this way, the cutting device may be inserted into the block of cheese without forming or requiring more than one vertical cut throughout the height of the block.

In some embodiments, all the horizontal extending knives extend from the vertical shaft in diverging directions.

The vertical cutting pattern in the block of cheese, may be related to the length of the one or more horizontal extending knives as well as for determining the pattern of moving and rotating the vertical shaft within the block of cheese, to separate the block of cheese into two or more cheese layers by horizontal cutting.

The pattern in which the vertical shaft is moved within the at least two vertical planes of the cheese block, may depend on the desired vertical pattern in the final cheese product. The vertical shaft may only be allowed to move in the vertical planes, defined by a predetermined vertical cutting pattern. This is advantageous, as it allows movement of the vertical shaft in the vertical planes within the cheese block, without damaging the cheese block by making e.g. random vertical cuttings in the cheese. The vertical shaft may only move within the vertical planes, which are desired in the final product. Thus, the pattern in which the vertical shaft is moved within the cheese block may be different for different vertical cutting patterns.

In some embodiments, the one or more horizontal extending knives have a length, which is dependent on a preselected vertical cutting pattern of the cheese block, the vertical cutting pattern being defined as the arrangement of vertical planes provided within the block of cheese after a vertical cutting of the block of cheese, the vertical cutting pattern comprise at least two vertical planes, wherein
- at least one vertical plane extend along the width of the block of cheese,
- at least one vertical plane extend along the length of the block of cheese,
- the at least one vertical plane extending along the width of the block of cheese intersects and is perpendicular on the at least one vertical plane extending along the length of the block of cheese,
the length of the one or more horizontal extending knives, being dependent on the preselected vertical cutting pattern such that:
- when two vertical planes intersect the center of the cheese block, the length of the one or more horizontal extending knives is that of the length from the center of the cheese block to one corner of the cheese block, minus the radius or equivalent radius of the vertical shaft,
- when one or none of the vertical planes intersect the center of the cheese block, the length of the one or more horizontal extending knives is that of the length from the intersection point between two vertical planes closest to the center of the cheese block, and to the closest corner of the cheese block, minus the radius or equivalent radius of the vertical shaft.

The cutting device of the present invention is configured for moving and rotating the vertical shaft in at least two vertical planes within the block of cheese, thereby moving and rotating each horizontal extending knife in a horizontal plane within the block of cheese, to provide horizontal cutting of the block of cheese. Thus, the cutting device further comprise means for moving and rotating the vertical shaft in the at least two vertical planes within the block of cheese.

In some embodiments, the cutting device comprises a robot configured for moving and rotating the vertical shaft in the at least two vertical planes within the block of cheese, the robot being programmed to move and rotate the vertical shaft in a predetermined sequence in the at least two vertical planes within the block of cheese, until the block of cheese is separated into cheese layers by the one or more horizontal extending knives.

The robot may further comprise an robotic arm holding the vertical shaft and means for inserting and removing the vertical shaft from the cheese block before and after horizontal cutting, respectively.

The robot may be programmed in a way, so it moves and rotates the vertical shaft within the block of cheese according to a predetermined vertical pattern, which depends on the desired number of cheese sections in each layer. For example, nine cheese sections in each layer may be provided by vertical cutting to provide two parallel vertical planes along the length of the cheese block and two parallel vertical planes along the width of the cheese block, wherein the vertical planes along the length and the width of the cheese block are perpendicular on each other and arranged in a way so all the sections formed are quadratic sections of the same size.

In another example, six cheese sections in each layer may be provided by two vertical cuttings along the length of the cheese block and one vertical cuttings along the width of the cheese block, wherein the vertical planes formed by the vertical cutting along the length and the width of the block of cheese are perpendicular on each other and arranged in a way so all the sections formed are rectangular sections of the same size. Different examples of sequences of movement and rotation of the vertical shaft to provide horizontal cutting are showed in the figures.

In some embodiments, the cutting device may comprise a guiding element configured to be arranged on or above the block of cheese, comprising at least one slit through which the vertical shaft extends and in which the vertical shaft can move, wherein the shape and dimensions of the slit determines the movement of the vertical shaft in the vertical planes within the cheese block.

The slits in the plate should be wide enough for the vertical shaft to move within them, such as 0.5 mm wider than the vertical shaft. This would be advantageous, as it provides guidance and stability to the movement of the vertical shaft within the block of cheese. A robot may control the movement and rotation of the vertical shaft within the vertical planes of the plate positioned above the open container.

In some embodiments, the container may be a retail container.

Preferably, a cutting device may further comprise a sensor configured to determine a distance (d) which either is a direct determination of or used in a determination of the height of the block of cheese.

In some preferred embodiments, the cutting device may be configured to on the basis of pre-selected number of layers to be provided by the horizontal cutting to determine the thickness of each of said layer to be of a predetermined thickness, such as a similar or even substantial equal thickness, the thickness may preferably be determined based on the height of the block of cheese divided by the pre-selected number of layers.

In a second aspect, the present invention relates to a method for horizontally cutting a block of cheese, preferably being cubic or cuboid, contained in a container being open at the top, utilizing a cutting device according to the present invention, on the basis of a preselected vertical cutting pattern of the block of cheese, the vertical cutting pattern being defined as the arrangement of vertical planes provided within the block of cheese after a vertical cutting of the block of cheese, the vertical cutting pattern comprise at least two vertical planes, wherein
- at least one vertical plane extend along the width of the block of cheese,
- at least one vertical plane extend along the length of the block of cheese,
- the at least one vertical plane extending along the width of the block of cheese intersect and are perpendicular on the at least one vertical plane extending along the length of the block of cheese,
the method comprising:
- inserting the cutting device into the block of cheese, such that the vertical shaft and the one or more horizontal extending knives are guided in at least one vertical plane within the block of cheese during insertion, until the one or more horizontal extending knives arrive at the horizontal plane to be cut,
- moving and rotating the vertical shaft in a predetermined sequence in the at least two vertical planes, thereby also moving and rotating the one or more horizontal extending knives in a predetermined sequence, until the one or more extending horizontal knives have horizontally cut the block of cheese into two or more cheese layers.

In some embodiments, the predetermined sequence may be determined such that a distal end of the one or more horizontal extending knives at least follow the circumference of the cheese block, while the vertical shaft move back and forth and rotate within the at least two vertical planes, thereby providing horizontal cutting of the block of cheese, separating the block of cheese in two or more cheese layers.

In some embodiments, the method may further comprise the step of vertically cutting the block of cheese before or after the step of horizontally cutting the block of cheese.

In some embodiments, the vertical cutting pattern may be selected such that vertical cutting of the block of cheese, separate the block of cheese into equally sized cheese sections.

In some embodiments, the method may further comprise determining, preferably by use of a sensor, the height of the block of cheese.

In some embodiments, the method may further comprise determine on the basis of a pre-selected number of layers to be provided by the horizontal cutting the thickness of each of said layer to be of a predetermined thickness, such as a similar or even substantial equal thickness, the thickness may preferably be determine based on the height of the block of cheese divided by the pre-selected number of layers.

In some embodiments, the each horizontal cutting into a layer may be carried consecutively one layer at a time, wherein when one horizontal layer is cut, the vertical shaft may be moved upward or downward by an amount of the thickness of the layer.

In a third aspect, the present invention relates to a method of producing a vertically and horizontally cut block of cheese in a container being open at the top, the method comprising:
a) filling a product into a container, preferably being sterilized and sprayed with slip spray,
b) coagulating the product into a block of cheese and
c) cutting the block of cheese according to the method of cutting a cubic or cuboid block of cheese contained in a container being open at the top, utilizing a cutting device according to the present invention.

The present invention is particularly, but not exclusively, advantageous for horizontally cutting cast acidified white cheese, such as feta, contained in a container being open at the top.

"Products" is used herein preferably to reference a substance which coagulates and forms cheese.

The process of cheese production may comprise filling a product into a square retail container, and coagulating the product into a block of cheese. Before, filling the product into the container, the container is preferably cleaned and sprayed with slip spray and brought to a filling station where it is filled with the desired quantity of product. After about 20 minutes coagulation time (e.g. in a sterile air zone) the container arrives to a cutting station to be cut into the desired shapes or patterns. The method may further comprises cutting the cheese vertically, to produce vertical cheese sections, preferably before horizontally cutting the block of cheese with the cutting device of the present invention, in order to produce layers of cheese. Thereby, the total amount of cheese to be packaged in a square container may be filled into the container in a single filling, and subsequently be cut at least horizontally with the cutting device of the present invention after coagulation. The cheese may be cut into many different patterns.

In preferred embodiments, the vertical planes in which the vertical shaft is moved during the horizontal cutting, coincide with the vertical planes provided by the vertically cutting the cheese.

The aspects of the present disclosure may each be combined with any of the other aspects. These and other aspects will be apparent from and elucidated with reference to the embodiments described hereinafter.

### BRIEF DESCRIPTION OF THE FIGURES

The cutting device according to the invention will now be described in more detail with regard to the accompanying figures, in which
Figure 1 shows an embodiment of a block of cheese contained in a container.
Figure 2 shows a vertical shaft according to several different embodiments of the present invention.
Figures 3 shows two embodiments of the present invention, wherein a vertical shaft comprising one horizontal extending knife have been inserted into a block of cheese according to the present invention.
Figure 4 illustrates the length of the one or more horizontal extending knives, which depends on the number of vertical planes intersecting the center of the cheese block.
Figure 5 illustrates the movement and rotation of the vertical shaft within the cheese block, when two vertical planes intersecting the center of the cheese block.
Figure 6 illustrates the movement and rotation of the vertical shaft within the cheese block, when one vertical planes intersecting the center of the cheese block.
Figure 7 illustrates the movement and rotation of the vertical shaft within the cheese block, when no vertical planes intersecting the center of the cheese block.
Figure 8 illustrates several different embodiments of a vertical cutting pattern, where two vertical planes intersecting the center of the cheese block.
Figure 9 illustrates several different embodiments of a vertical cutting pattern, where one vertical planes intersecting the center of the cheese block.
Figure 10 illustrates several different embodiments of a vertical cutting pattern, where no vertical planes intersecting the center of the cheese block.
Figure 11 illustrates a three dimensional view of a vertical shaft extending through a guiding element arranged above a block of cheese contained in a container.
Figure 12 illustrates a three dimensional view of a cutting device
Figure 13 illustrates different embodiments of the cross-section and shape of a horizontal extending 2. knife, and
Figure 14 schematically illustrating a block of cheese in a container.

The figures merely illustrates ways of implementing embodiment of the present disclosure. The invention is defined by the appended claims.

### DETAILED DESCRIPTION OF THE INVENTION

The present invention provides a device and a method for cutting a block of cheese 2 contained in a container 3 being open at the top 4, in a horizontal plane 8.

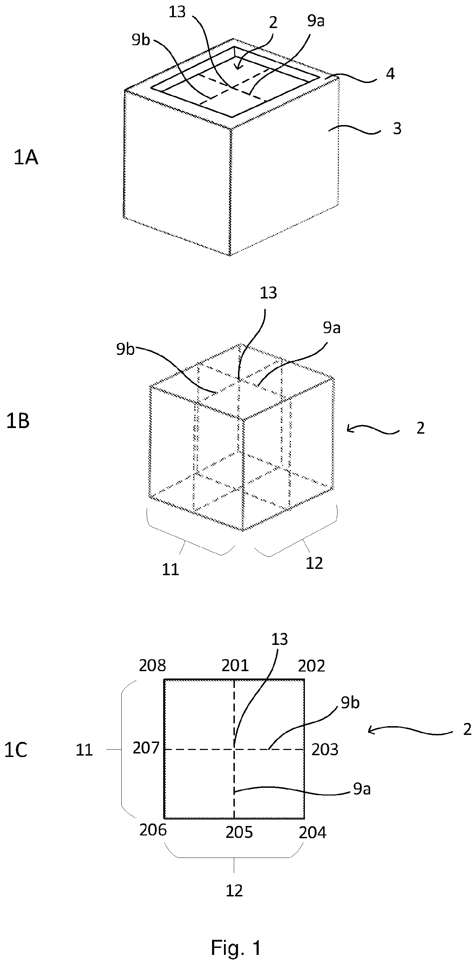

Fig. 1a shows a three-dimensional view of a cubic block of cheese 2 contained in a container 3 being open at the top 4. The block of cheese 2 have a vertical cutting pattern, defined by two vertical planes 9a, 9b within the block of cheese 2. The arrangement of vertical planes 9a, 9b are illustrated by dotted lines in the figure. Fig. 1b shows a three-dimensional view of the cubic block of cheese 2 to be contained in a container 3, but without the container 3. A width 11, a length 12 and a height define the block of cheese. When the block of cheese 2 is vertically cut, it is cut in a predetermined vertical cutting pattern, defined by at least two vertical planes 9a, 9b. At least one vertical plane 9a extend along the width 11 of the block of cheese 2 and at least one vertical plane 9b extend along the length 12 of the block of cheese 2. The vertical planes 9a, 9b intersect in the center 13 of the block of cheese 2 and are perpendicular on each other. When the vertical cutting have been performed, the vertical planes 9a, 9b separate the block of cheese into vertically separated quadratic cheese sections, preferably of the same size. Fig. 1c shows the cubic block of cheese 2 from fig. 1b viewed from above.

The numerals 202, 204, 206 and 208 indicate the corners of the block of cheese 2 and the numbers 201, 203, 205 and 207 indicate the center points on the outer walls of the block of cheese 2. The vertical planes 9 extend between two center points. The vertical plane 9 extending between the center points 201 and 205 are referred to as the 1-5 vertical plane 9a, whereas the vertical plane 9 extending between the center points 203 and 207 are referred to as the 3-7 vertical plane 9b.

In the following figures, the reference numerals 13, 9a, 9b, 201, 202, 203, 204, 205, 206, 207 and 208 may not be used, to avoid to many reference numbers in the figures. If reference is made too one of the numbers and the number is not present in the figure, reference is made to fig. 1c.

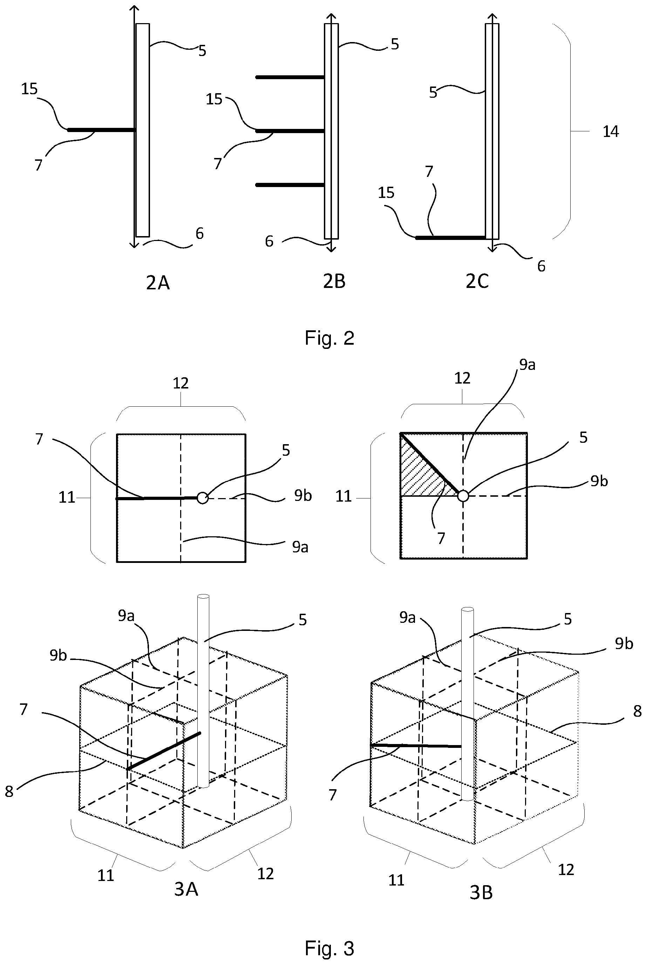

The vertically cut may be provided by a separate knife or set of knives which is moved through the block of cheese 2 to provide the vertical cut according to the vertical cutting pattern. Alternatively, the cutting may be provided by the knifes 7, e.g. by using a vertical shaft 5 having a knife at its lower end as shown in fig. 2C, and moving the vertical shaft 5 with knife(s) 7 through the block of cheese 2 to provide the cuts along the vertical cutting pattern. In another alternative, the vertical shaft 5 may be used as a knife for providing vertical cuts according to the vertical cutting pattern by moving the vertical shafts along the vertical cutting pattern. The latter has inter alia the advantage that horizontal and vertical cutting may be carried out in the same process.

Fig. 2 illustrates several embodiments of a vertical shaft 5.

The vertical shaft 5 has a length 14 and a diameter. Fig. 2a and 2c shows a vertical shaft 5 with one horizontal extending knife 7 extending horizontally and perpendicular out from the vertical shaft 5. Each horizontal extending knife 7 have one end attached to the vertical shaft 5 and a distal end 15. In fig. 2a, the horizontal extending knife 7 is arranged on the vertical shaft 5 in a way so it is configured for cutting the block of cheese 2 in at least one horizontal plane 8 to provide at least two equally sized layers of cheese.

The vertical shaft 5 is configured to be inserted into the block of cheese 2, preferably in a way so one end of the vertical shaft 5 touches the bottom wall of the container 3, before horizontal cutting is started. The length 14 of the vertical shaft 5 depends on the height of the block of cheese 2 wherein it is to be inserted. Preferably, the length 14 of the vertical shaft 5 is longer than the height of the block of cheese so it can be connected to means for rotating and moving the vertical shaft 5, such as a robot 18. The vertical shaft 5 is configured to rotate 360 degrees around a longitudinal axis 6 in the center of the vertical shaft 5.

In a preferred embodiment, the length of the vertical shaft 5 below the lower most knife is in the order of 10 mm, and the end of the vertical shaft 5 is at least during the horizontal cutting situation in a distance from the bottom.

In fig. 2c, the horizontal extending knife 7 is perpendicularly arranged at an lower end of the vertical shaft 5, configured for cutting the block of cheese 2 in one or more horizontal planes 8 to provide two or more layers of cheese. The vertical shaft 5 is configured for sequential insertion into the block of cheese 2; in a first sequential step, the vertical shaft 5 is lowered a predetermined distance down into the block of cheese 2 without touching the bottom of the container. The distance the vertical shaft 5 is lowered, depends on the desired height of each cheese layer. When the vertical shaft 5 have been lowered to a satisfactory level within the block of cheese 2, horizontal cutting is performed.

In a second sequential step, the vertical shaft 5 is further lowered into the block of cheese 2 for a predetermined distance and horizontal cutting is again performed. This can be repeated until a desired number of cheese layers has been formed.

In fig 2b, three horizontal extending knives are arranged perpendicular extending on the vertical shaft 5, configured for cutting the block of cheese 2 in three horizontal planes 8 to provide four cheese layers. The three horizontal extending knives 7 extend from the vertical shaft 5 in a substantially identical direction. The vertical shaft is configured for insertion into the block of cheese 2, in a way so one end of the vertical shaft 5 touch the bottom of the container 3, before horizontal cutting is started.

The vertical shaft may be inserted into the block of cheese 2 by means for moving and rotating the vertical shaft within the block of cheese, such as a robot 18 or by other means.

Fig. 3 illustrates a block of cheese 2 as described in fig. 1b and 1c, wherein a vertical shaft 5 has been fully inserted. Fig. 3a shows a three-dimensional side view of the block of cheese 2 wherein the vertical shaft 5 has been fully inserted, as well as a top view of a cross-section of the same block of cheese 2, wherein the horizontal extending knife 7 inside the block of cheese 2 can be seen. The vertical shaft 5 and the horizontal extending knife 7 extending horizontally out from the vertical shaft 5 have been vertically inserted into the block of cheese from above, into one of the vertical planes 9b. Hereafter, the horizontal cutting may be performed by movement and rotation of the vertical shaft 5 within the vertical planes 9a, 9b.

Fig. 3b shows the block of cheese 2 illustrated in fig 3a, wherein the vertical shaft 5 have been moved toward the center 13 of the block of cheese 2 and rotated 45 degrees clockwise. During movement and rotation of the vertical shaft 5, the distal end 15 of the horizontal extending knife 7 follows the wall of the block of cheese until it reaches one corner 202, 204, 206, 208 of the block of cheese 2. When the distal end 15 of the horizontal extending knife 7 reaches the corner 202, 204, 206, 208 of the block of cheese 2, the vertical shaft 5 is in the center 13 of the block of cheese 2. In this way, by moving and rotating the vertical shaft 5 as described, within the block of cheese 2, horizontal cutting is performed in the hatched area shown in the top view of the cheese block 2 in fig. 3b.

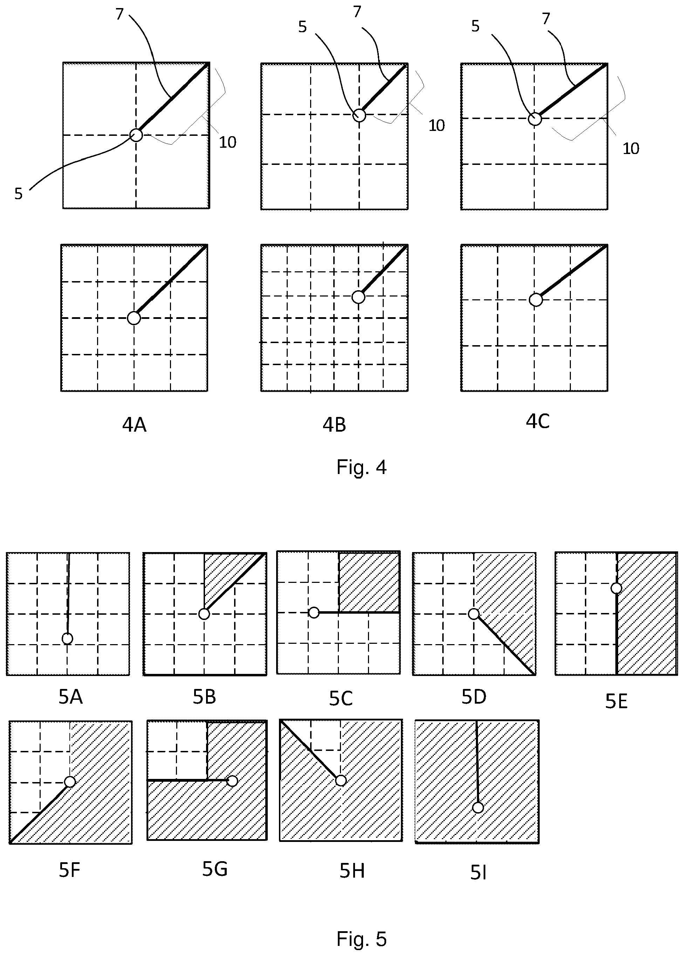

The one or more horizontal extending knives 7 each has a length 10, which may depend on the desired number of vertical planes 9 and their arrangement within the block of cheese 2. Fig. 4 illustrates different embodiments where the length 10 of the one or more horizontal extending knives 7 are different and selected depending on the number and arrangement of vertical planes 9 (vertical cutting pattern) within the block of cheese 2.

As illustrated in fig. 4a, if two vertical planes 9a, 9b intersect in the center 13 of the block of cheese 2, the length 10 of the one or more horizontal extending knives 7 is preferably that of the length from the center 13 of the block of cheese 2 to one corner 202, 204, 206, 208 of the block of cheese 2, minus the radius of the vertical shaft 5.

As illustrated in fig. 4b, for cheese blocks, where no vertical planes 9 intersect the center 13 of the block of cheese, the length 10 of the one or more horizontal extending knives 7 is preferably that of the length from the intersection point between two vertical planes, as close to the center 13 of the block of cheese 2 as possible, and to the closest corner 202, 204, 206, 208 of the block of cheese 2, minus the radius of the vertical shaft 5.

As illustrated in fig. 4c, if only one vertical plane 9 intersect the center 13 of the block of cheese, the length 10 of the one or more horizontal extending knives 7 is preferably that of the length from the intersection point between two vertical planes 9, as close to the center 13 of the block of cheese 2 as possible, and to the closest corner 202, 204, 206, 208 of the block of cheese 2, minus the radius of the vertical shaft 5.

The movement and rotation of the vertical shaft 5 within the block of cheese 2 during horizontal cutting, depend on a predetermined vertical cutting pattern of the block of cheese 2. If the vertical cutting pattern is determined, such that two vertical planes 9 intersect in the center 13 of the block of cheese 2, the sequential movement and rotation of the vertical shaft 5 within the vertical planes 9, may be as illustrated in fig. 5a-5i.

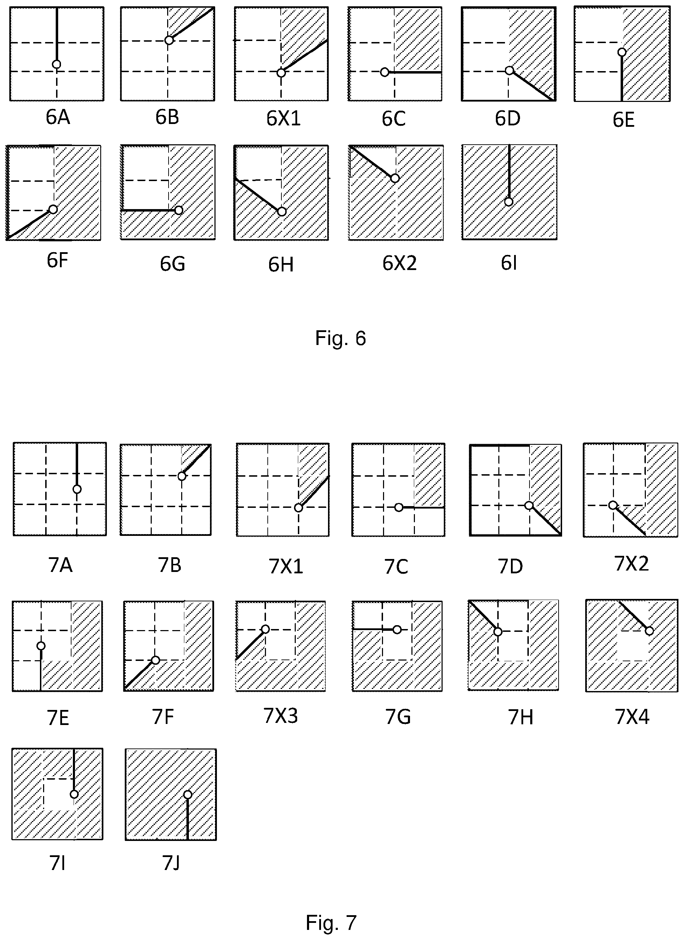

If only one vertical plane 9 intersect the center 13 of the block of cheese 2, the pattern illustrated in fig. 6a-6i may be used to horizontally cut the block of cheese 2.

If no vertical planes 9 intersect the center 13 of the block of cheese 2, the sequential movement and rotation of the vertical shaft 5 within the vertical planes 9, may be as illustrated in fig. 7a-7j.

Fig. 5 illustrates a cross-sectional view of a block of cheese wherein a horizontal extending knife 7 have been inserted, seen from above. The block of cheese 2 is similar to that illustrated in fig. 1c and the vertical shaft 5 and horizontal extending knife 7 is similar to that in fig. 4a. However, for illustrative clearness, all reference numerals shown in fig. 1c and 4a are not shown in fig 5.

The block of cheese 2 shown in fig. 5, comprise six vertical planes 9; three vertical planes 9 extending along the width 11 of the block of cheese 2 and three vertical planes 9 extending along the length 12 of the block of cheese 2.

Fig. 5a-5i, illustrates the movement and rotation of a vertical shaft 5 and the horizontal extending knife 7 in the vertical planes 9 within that block of cheese 2 during horizontal cutting. The vertical planes 9a extending along the width 11 of the block of cheese 2 intersect the vertical planes 9b extending along the length 12 of the block of cheese 2, in a way so sixteen vertically separated quadratic cheese sections of the same size are formed. As two vertical planes 9a, 9b intersect each other in the center 13 of the block of cheese 2, the length 10 of the horizontal extending knife 7 is that of the length from the center 13 of the cheese block to one corner 202, 204, 206, 208 of the block of cheese, minus the radius of the vertical shaft 5.

In fig. 5a, the vertical shaft 5 have been fully inserted into the block of cheese 2, and the horizontal extending knife 7 extends horizontally out from the vertical shaft 5. The vertical shaft 5 and the horizontal extending knife 7 have been inserted into the block of cheese 2. The horizontal extending knife has been inserted into the 1/5 vertical plane 9 in a way so the distal end 15 of the horizontal extending knife 7 touch a center point 201 on one wall of the block of cheese 2. The vertical shaft 5 is rotated clockwise, in a way so the distal end 15 of the horizontal extending knife 7 follows the wall of the block of cheese 2, while the vertical shaft moves along the 1/5 vertical plane 9, towards the center point 201. When the distal end 15 of the horizontal extending knife 7 reaches the first corner 202, the vertical shaft 5 is in the center 13 of the cheese block 2 (fig. 5b). Then, the rotation of the vertical shaft 5 continues with the distal end 15 of the horizontal extending knife 7 following the block of cheese 2 wall towards the next center point 203 and the vertical shaft 5 moving in the 3/7 vertical plane 9, towards the center point 207. When the distal end 15 of the horizontal extending knife 7 reaches center point 203 (fig. 5c) and starts moving towards the next corner 204 (fig. 5d), the vertical shaft is guided back towards the center 13 of the cheese block 2 along the 3/7 vertical plane towards center point 203. When the distal end 15 of the vertical shaft 5 reaches the corner 204, the vertical shaft 5 reach the center 13 of the block of cheese 2 (fig. 5d). During further rotation and movement of the vertical shaft 5, the horizontal extending knife 7 is guided along the cheese block wall, reaching the next center point 205 (fig. 5e) and moving towards corner 206 (fig. 5f). Simultaneously, the vertical shaft 5 is moving back along the 1-5 vertical plane 9 towards the center point 201 and then to the center 13 of the block of cheese 2, which is reached when the distal end 15 of the horizontal extending knife 7 reaches the corner 206 (fig. 5f). When the vertical shaft 5 is further rotated, the horizontal extending knife 7 continues towards center point 207 (fig. 5g) and towards corner 208 (fig. 5h), while the vertical shaft 5 is moved along the 3-7 vertical plane in direction towards center point 203. When the horizontal extending knife 7 reaches center point 207, the vertical shaft is moved back towards the center 13 of the cheese block 2, until it reaches the center 13 of the cheese block 2. At this point, the distal end 15 of the horizontal extending knife 7 arrives at corner 208 (fig. 5h).The horizontal cutting is completed and two separate cheese layers are formed, by moving the distal end of the horizontal extending knife 7 along the block of cheese 2 wall from corner 208 until it reaches center point 201, during which the vertical shaft 5 is guided along the 1-5 vertical plane 9 in direction towards 5 (fig. 5i). When the horizontal cutting is completed, the vertical shaft 5 can be lifted out of the block of cheese 2 or to another vertical level, and the same procedure can be repeated. The vertical shaft 5 may be manually removed. The vertical shaft 5 may be removed by the means for moving and rotating the vertical shaft 5 within the block of cheese, such as a robot 18 or by other means.

The cutting device 1 of the present invention comprise the vertical shaft 5 and the one or more horizontal extending knives 7, as well as means for moving and rotating the vertical shaft 5 within the vertical planes 9 of the block of cheese. The means for moving and rotating the vertical shaft may be a robot 18 programmed to perform a specific sequential pattern, which depends on the predetermined vertical cutting pattern.

Fig. 6a-6i illustrates an embodiment of the process of horizontal cutting performed by the horizontal extending knife 7, during movement and rotation of the vertical shaft 5 along the vertical planes 9 within the block of cheese 2, when only one vertical plane 9 intersect the center 13 of the block of cheese 2. The block of cheese illustrated in fig. 6 contains a vertical cutting pattern, formed by three vertical planes 9: one vertical plane 9a extending along the width 11 of the block of cheese 2 and two vertical planes 9b, extending along the length 12 of the block of cheese. The vertical planes 9a extending along the width 11 of the block of cheese 2 intersect the vertical planes 9b extending along the length 12 of the block of cheese 2 and are perpendicular on each other, in a way so six vertically separated rectangular cheese sections of the same size are formed. The length 10 of the horizontal extending knife 7 in such cases, is preferably that of the length from the intersection point between two vertical planes 9a, 9b as close to the center 13 of the cheese block as possible, and to the closest corner 202, 204, 206, 208 of the block of cheese 2, minus the radius of the vertical shaft 5. The process of horizontal cutting illustrated in fig. 6, is similar to that described for fig. 5, but contains two further steps which are illustrated in fig. 6x1 and 6x2, wherein the vertical shaft 5 is moved in the vertical planes 9 without being rotated.

Fig. 7a-7i illustrates an embodiment of the process of horizontal cutting performed by the horizontal extending knife 7, during movement and rotation of the vertical shaft 5 in the vertical planes 9 within the block of cheese, when no vertical planes 9 intersect the center 13 of the block of cheese 2. The block of cheese 2 in fig. 7 contains a vertical cutting pattern, formed by four vertical planes: two vertical planes 9a extending along the width 11 of the block of cheese 2 and two vertical planes 9b extending along the length 12 of the block of cheese 2. The vertical planes extending along the width 11 of the block of cheese 2 intersect the vertical planes 9b extending along the length 12 of the block of cheese 2 and are perpendicular on each other, in a way so nine vertically separated quadratic cheese sections of the same size are formed. The length of the horizontal extending knife 7 in such cases, is preferably that of the length from the intersection point between two vertical planes 9a, 9b as close to the center 13 of the cheese block 2 as possible, and to the closest corner 202, 204, 206, 208 of the block of cheese 2, minus the radius of the vertical shaft 5. The process of horizontal cutting illustrated in fig. 7, is similar to that described for fig. 6, but contains four steps of moving the vertical shaft5 in the vertical planes 9 without rotation, as illustrated in fig. 7x1, 7x2, 7x3 and 7x4. Furthermore, the vertical shaft is rotated 180 degrees counter clockwise in the final step of horizontal cutting (Fig 7j).

The container and the cheese block, is not necessarily quadratic as shown in fig. 1 and 3-7. The container and cheese block 2 may be rectangular.

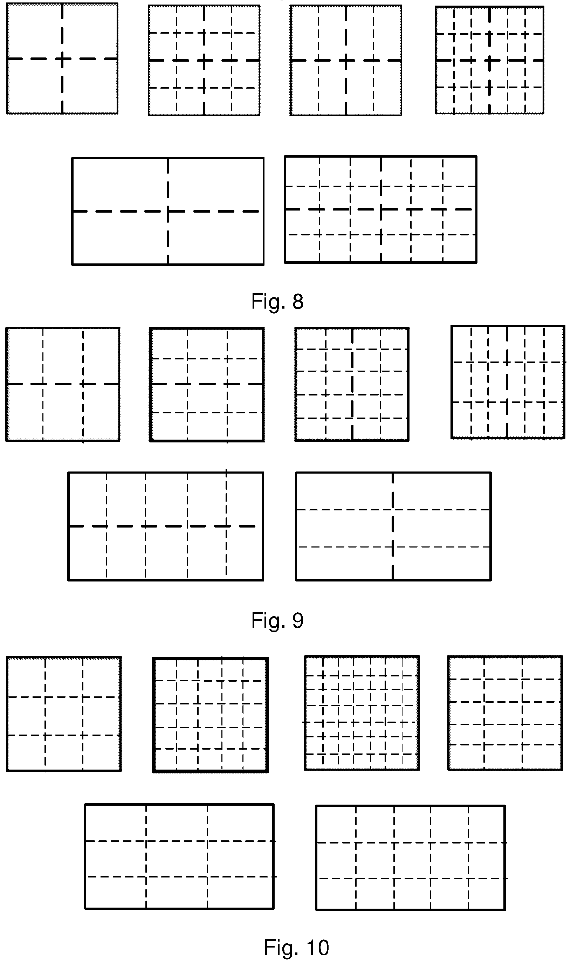

Fig. 8, 9 and 10 illustrates different embodiments of vertical patterns, wherein two, one or no vertical planes 9 intersect the center 13 of the cheese block 2, respectively. The bold dotted lines, indicate the vertical planes 9 intersecting the center 13 of the block of cheese 2.

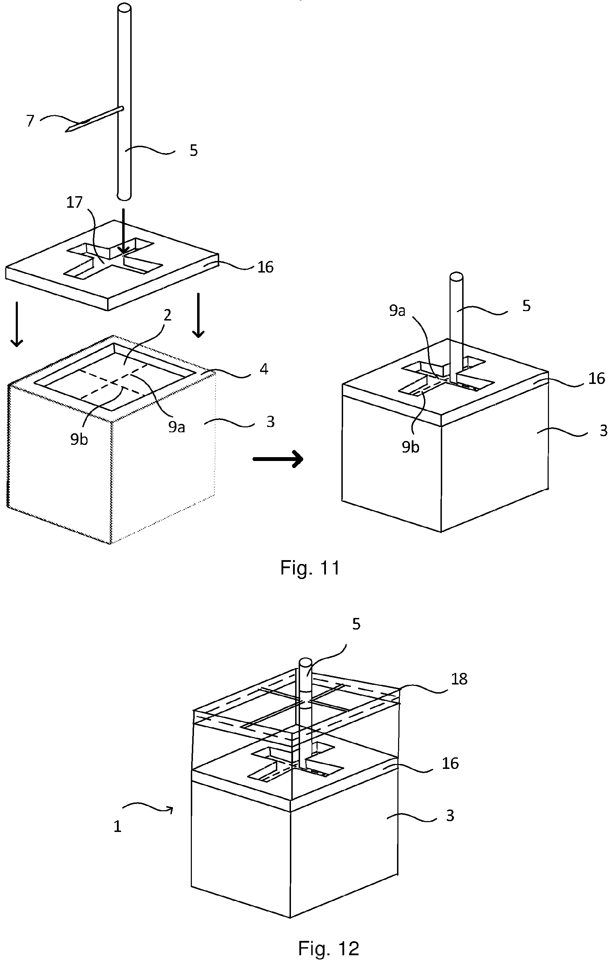

Fig. 11 illustrates a three dimensional view of a vertical shaft extending through a guiding element 16 arranged above a block of cheese 2 contained in a container 3 being open at the top. The guiding element 16 comprise a slit 17 through which the vertical shaft 5 extends and in which the vertical shaft 5 can move. The shape and dimensions of the slit 17 determines where the vertical shaft 5 can move in the vertical planes 9 within the cheese block 2. The figure shows the different elements disassembled as well as assembled.

Fig. 12 illustrates an embodiment of a cutting device 1. The cutting device 1 comprise a vertical shaft 5 and a horizontal extending knife 7 extending out from the vertical shaft 5. Furthermore, the cutting device 1 comprise a guiding element 16 and a means for moving and rotating the vertical shaft 5 in the at least two vertical planes 9 within the block of cheese 2. The means for moving an rotating the vertical shaft is in this case a robot 18, programmed to move and rotate the vertical shaft 5 in a predetermined sequence in the at least two vertical planes 9 within the block of cheese 2, as well as rotating the vertical shaft 5 until the block of cheese 2 is separated into cheese layers by the one or more horizontal extending knives 7. The robot 18 is attached to the vertical shaft 5 through rigid elements, which can contract or extend. The rigid elements are further attached to a frame placed on the guiding element, and can slide along the length or width of the cheese block, in sliding tracks illustrated by dotted lines in the figure. The robot 18 may have many other configurations than illustrated in the present embodiment. The guiding element 16 is not essential for the present invention.

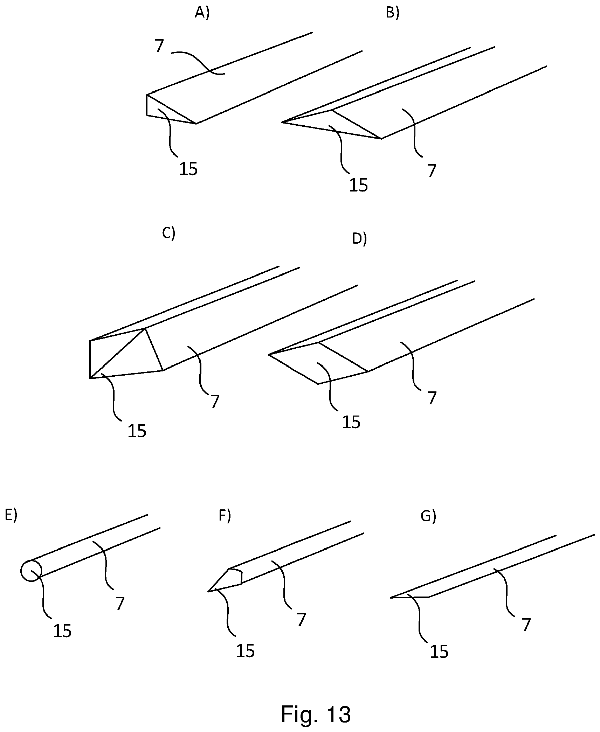

Fig. 13 (A-G) illustrates different embodiments of the cross-section and shape of a horizontal extending knife according to the present invention.

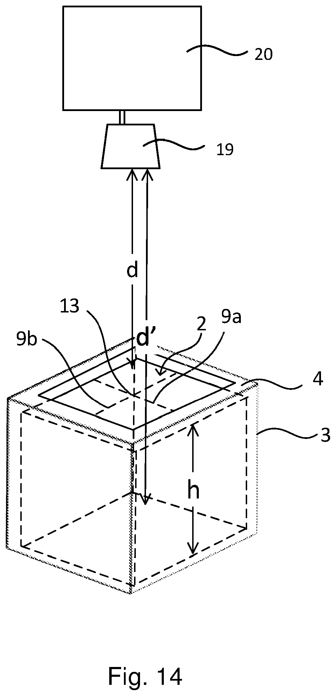

The horizontal extending knives have a shape that enable them to horizontally cut through the cheese block. The cross-section of a horizontal extending knife have a vertical length and a horizontal length. Preferably, the horizontal length of the cross-section of a horizontal extending knife 7 is as small as possible, such as less than 1 cm, such as less than 0.5 cm, such as less than 0.3 cm, to avoid unnecessary damage to the block of cheese 2 during horizontal cutting. The cross-section of a horizontal extending knife 7 may e.g. be triangular, diamond shaped or round. Preferably, the free end 15 of the horizontal knife 7 extends into a tip, so the tip can reach the corners of the block of cheese 202, 204, 206, 208 . Reference is made to fig. 14 illustrating a block of cheese 2 in a container 4 - in fig. 14, the contours of the block of cheese 2 inside the container are shown with dotted lines. In some situations, the heights of the blocks of cheese 2 cast varies and the number of layers is specified to be a specific number and in such cases, the use of a vertical shaft 5 with equidistant distanced horizontal extending knifes 7 (e.g. as shown in fig. 2B) will produce an upper most layer with a thickness depending on the actual height of the block of cheese 2 to be cut. To provide, e.g. that each layer has a similar or even substantial equal thickness, the thickness is determined based on the height of the block of cheese 2 divided by the number of layers to be obtained - as a non-limiting example, if the height is 10 cm and the number of layers are four, the thickness of each layer is determined as 10cm/4=2.5 cm. In other embodiments, the height of each layer may be different from each other. The height h of the block of cheese 2 may e.g. be determined by use of a sensor 19 configured to determine a distance d which either is a direct determination or used in a determination of the height of the block of cheese. For instance, the sensor may be located at fixed position above the block of cheese and determining the distance d between the surface of the block of cheese 2 and the sensor 19. Further, the distance d' from the sensor to the bottom of the container is considered known, since dimensions of the containers used only varies to an extend that can be ignored. Thus, the height of the block of cheese 2 can be determined by subtracting the distance determined by the sensor from the known distance between the bottom of the container and the sensor. The sensor is typically connected to an electronic processing unit 20 being configured to on the basis of the determined distance to determine the height of the block of cheese.

Once the thickness of the layers has been determined, a shaft with (typically) a single knife as shown in fig. 2A or 2C is used to produce the horizontal cuts, one layer at a time with the method disclosed herein and as detailed e.g. in connection with figures 3-12. When one horizontal layer is cut, the vertical shaft 5 is moved upward or downward by an amount of the thickness of the layer, depending on whether the next layer to be cut is above or below the recent cut layer. The layers can be consecutively cut in a upward or downward order.

In other embodiment, the sensor is arranged at a distal end of a vertically moveable shaft and the sensor is of a type configured to determine contact or close contact of the sensor with the surface of block of cheese. The sensor may be an optic sensor or a sensor sensing omics resistance in the atmosphere surrounding the sensor. In embodiments including a omics resistance sensor type, the sensor will sense a characteristic change in omics resistance when contact is made with the block of cheese. When this change occur, the position of the surface of the block of cheese has been determined, e.g. determining the travel of the vertical movement of the vertical moveable shaft for a well know initial position.

Based on the figures and teachings provided herein, the skilled person should be able to programme a robot to carry out any pattern of vertical shaft 5 movement and rotation, which will result in horizontal cutting of a cheese block 2 in a square container, using the cutting device of the present invention, to provide layers of square cheese sections.

### LIST OF REFERENCE SYMBOLS USED

- 1: cutting device
- 2: block of cheese
- 3: container
- 4: open top of container
- 5: vertical shaft
- 6: longitudinal axis of vertical shaft
- 7: horizontal extending knife
- 8: horizontal planes
- 9: vertical planes
- 9a: vertical plane extending along the width of block of cheese
- 9b: vertical plane extending along the length of block of cheese
- 10: length of horizontal extending knife
- 11: width of block of cheese
- 12: length of block of cheese
- 13: center of block of cheese
- 14: length of vertical shaft
- 15: distal end of horizontal extending knife
- 16: guiding element
- 17: slit in guiding element
- 18: robot
- 201, 203, 205, 207: center point on walls of block of cheese
- 202, 204, 206, 208: corners of block of cheese

## Claims

1. A cutting device (1) configured for horizontally cutting a block of cheese (2) contained in a container (3) being open at the top (4), the cutting device (1) comprising:
- an elongate vertical shaft (5) configured to be partly inserted into the block of cheese (2) and being configured for rotating 360 degrees around its longitudinal axis (6);
- one or more horizontal extending knives (7) extending out from the vertical shaft (5), configured to be fully inserted into the block of cheese (2) and being configured for cutting the block of cheese (2) in one or more horizontal planes (8);
**characterized in that** the cutting device is configured for horizontally cutting a cubic or cuboid block of cheese contained in a container and Z whererrrthe cutting device (1) is further configured for moving and rotating the vertical
shaft (5) in at least two vertical planes (9) within the block of cheese (2), thereby moving and rotating each horizontal extending knife (7) in a horizontal plane (8) within the block of cheese (2), to provide horizontal cutting of the block of cheese (2).

2. The cutting device (1) according to claim 1, wherein the one or more horizontal extending knives (7) have a length (10), which is dependent on a preselected vertical cutting pattern of the cheese block (2), the vertical cutting pattern being defined as the arrangement of vertical planes (9) provided within the block of cheese (2) after a vertical cutting of the block of cheese (2), the vertical cutting pattern comprise at least two vertical planes (9), wherein
- at least one vertical plane (9a) extend along the width (11) of the block of cheese (2),
- at least one vertical plane (9b) extend along the length (12) of the block of cheese (2),
- the at least one vertical plane (9a) extending along the width (11) of the block of cheese (2) intersects and is perpendicular on the at least one vertical plane (9b) extending along the length (12) of the block of cheese (2),
the length (10) of the one or more horizontal extending knives (7), being dependent on the preselected vertical cutting pattern such that:
- when two vertical planes (9) intersect the center (13) of the cheese block (2), the length (10) of the one or more horizontal extending knives (7) is that of the length from the center (13) of the cheese block (2) to one corner (202, 204, 206, 208) of the cheese block, minus the radius or equivalent radius of the vertical shaft,
- when one or none of the vertical planes (9) intersect the center (13) of the cheese block (2), the length (10) of the one or more horizontal extending knives (7) is that of the length from the intersection point between two vertical planes (9) closest to the center (13) of the cheese block (2), and to the closest corner (202, 204, 206, 208) of the cheese block (2), minus the radius or equivalent radius of the vertical shaft (5).

3. The cutting device (1) according to any one of the preceding claims, wherein the cutting device (1) comprises a robot (18) configured for moving and rotating the vertical shaft (5) in the at least two vertical planes (9) within the block of cheese (2), the robot (18) being programmed to move and rotate the vertical shaft (5) in a predetermined sequence in the at least two vertical planes (9) within the block of cheese (2), until the block of cheese (2) is separated into cheese layers by the one or more horizontal extending knives (7).

4. The cutting device (1) according to any of the preceding claims, wherein the cutting device (1) comprise a guiding element (16) configured to be arranged on or above the block of cheese (2), comprising at least one slit (17) through which the vertical shaft (5) extends and in which the vertical shaft (5) can move, wherein the shape and dimensions of the slit (17) determines the movement of the vertical shaft (5) in the vertical planes (9) within the cheese block (2).

5. The cutting device (1) according to any of the preceding claims, wherein the cutting device (1) comprise more than one horizontal extending knife (7), preferably two, three, four, five or even six horizontal extending knives (7), for cutting the block of cheese in more than one horizontal plane (8).

6. The cutting device (1) according to any of the preceding claims, wherein the more than one horizontal extending knives (7) extend from the vertical shaft (5) in an identical direction.

7. The cutting device according to any of the preceding claims, wherein the container is a retail container.

8. The cutting device according to any of the preceding claims, wherein cutting device further comprising a sensor (19) configured to determine a distance (d) which either is a direct determination of or used in a determination of the height of the block of cheese (2).

9. The cutting device according to claim 8, wherein the cutting device is configured to on the basis of pre-selected number of layers to be provided by the horizontal cutting to determine the thickness of each of said layer to be of a predetermined thickness, such as a of similar or even substantial equal thickness, the thickness is preferably determined based on the height of the block of cheese (2) divided by the pre-selected number of layers.

10. A method for horizontally cutting a cubic or cuboid block of cheese (2) contained in a container (3) being open at the top (4), utilizing a cutting device (1) according to any of claims 1-6, on the basis of a preselected vertical cutting pattern of the block of cheese (2), the vertical cutting pattern being defined as the arrangement of vertical planes (9) provided within the block of cheese (2) after a vertical cutting of the block of cheese (2), the vertical cutting pattern comprise at least two vertical planes (9), wherein
- at least one vertical plane (9a) extend along the width (11) of the block of cheese (2),
- at least one vertical plane (9b) extend along the length (12) of the block of cheese (2),
- the at least one vertical plane (9a) extending along the width (11) of the block of cheese (2) intersect and are perpendicular on the at least one vertical plane (9b) extending along the length (12) of the block of cheese (2),
the method comprising:
- inserting the cutting device (1) into the block of cheese (2), such that the vertical shaft (5) and the one or more horizontal extending knives (7) are guided in at least one vertical plane (9) within the block of cheese (2) during insertion, until the one or more horizontal extending knives (7) arrive at the horizontal plane (8) to be cut,
- moving and rotating the vertical shaft (5) in a predetermined sequence in the at least two vertical planes (9), thereby also moving and rotating the one or more horizontal extending knives (7) in a predetermined sequence, until the one or more horizontal extending knives (7) have horizontally cut the block of cheese (2) into two or more cheese layers.

11. The method according to claim 10, wherein the predetermined sequence are determined such that a distal end (15) of the one or more horizontal extending knives (7) at least follow the circumference of the cheese block (2), while the vertical shaft (5) move back and forth and rotate within the at least two vertical planes (9), thereby providing horizontal cutting of the block of cheese (2), separating the block of cheese (2) in two or more cheese layers.

12. The method according to claim 10 or 11, wherein the method further comprises the step of vertically cutting the block of cheese (2) before or after the step of horizontally cutting the block of cheese (2).

13. The method according to any of claims 10-12, wherein the vertical cutting
pattern are selected such that vertical cutting of the block of cheese (2), separate the block of cheese into equally sized cheese sections.

14. The method according to any of claims 10-13, wherein the method further
comprising determining, preferably by use of a sensor (9), the height of the block of cheese (2).

15. The method according to claim 14, wherein the method further comprising to determine on the basis of a pre-selected number of layers to be provided by the horizontal cutting the thickness of each of said layer to be of a predetermined thickness, such as a similar or even substantial equal thickness, the thickness is preferably determined based on the height of the block of cheese (2) divided by the pre-selected number of layers.

16. The method according to any of claims 10-15, wherein the each
horizontal cutting into a layer is carried out consecutively one layer at a time, wherein when one horizontal layer is cut, the vertical shaft (5) is moved upward or downward by an amount of the thickness of the layer.

17. A method of producing a vertically and horizontally cut block of cheese (2) in a container (3) being open at the top (4), the method comprising:
a) filling a product into a sterilized container sprayed with slip spray,
b) coagulating the product into a block of cheese (2) and
c) cutting the block of cheese (2) according to the method of any of claims 10-16. Z

18. The method according to any of the preceding claims 10-17, wherein the container is a retail container.

## Patentansprüche

1. Schneidvorrichtung (1), die konfiguriert ist, um einen Käseblock (2), der in einem an der Oberseite (4) offenen Behälter (3) enthalten ist, horizontal zu schneiden, wobei die Schneidvorrichtung (1) umfasst:
- einen länglichen vertikalen Schaft (5), der konfiguriert ist, um teilweise in den Käseblock (2) eingeführt zu werden, und der konfiguriert ist, um sich 360 Grad um seine Längsachse (6) zu drehen;
- ein oder mehrere sich horizontal erstreckende Messer (7), die sich von dem vertikalen Schaft (5) aus erstrecken, die konfiguriert sind, um vollständig in den Käseblock (2) eingeführt zu werden, und konfiguriert sind, um den Käseblock (2) in einer oder mehreren horizontalen Ebenen (8) zu schneiden;
**dadurch gekennzeichnet, dass** die Schneidvorrichtung konfiguriert ist, um einen in einem Behälter enthaltenen würfelförmigen oder quaderförmigen Käseblock horizontal zu schneiden, und die Schneidvorrichtung (1) weiter konfiguriert ist, um den vertikalen Schaft (5) in mindestens zwei vertikalen Ebenen (9) innerhalb des Käseblocks (2) zu bewegen und zu drehen, wodurch jedes sich horizontal erstreckende Messer (7) in einer horizontalen Ebene (8) innerhalb des Käseblocks (2) bewegt und gedreht wird, um ein horizontales Schneiden des Käseblocks (2) bereitzustellen.

2. Schneidvorrichtung (1) nach Anspruch 1, wobei das eine oder die mehreren sich horizontal erstreckenden Messer (7) eine Länge (10) aufweisen, die von einem vorausgewählten vertikalen Schnittmuster des Käseblocks (2) abhängt, wobei das vertikale Schnittmuster als die Anordnung von vertikalen Ebenen (9) definiert ist, die innerhalb des Käseblocks (2) nach einem vertikalen Schneiden des Käseblocks (2) bereitgestellt sind, wobei das vertikale Schnittmuster mindestens zwei vertikale Ebenen (9) umfasst, wobei
- mindestens eine vertikale Ebene (9a) sich entlang der Breite (11) des Käseblocks (2) erstreckt,
- mindestens eine vertikale Ebene (9b) sich entlang der Länge (12) des Käseblocks (2) erstreckt,
- die mindestens eine vertikale Ebene (9a), die sich entlang der Breite (11) des Käseblocks (2) erstreckt, die mindestens die vertikale Ebene (9b), die sich entlang der Länge (12) des Käseblocks (2) erstreckt, schneidet und senkrecht zu ihr steht,
wobei die Länge (10) des einen oder der mehreren sich horizontal erstreckenden Messer (7) von dem vorausgewählten vertikalen Schnittmuster abhängig ist, sodass:
- wenn zwei vertikale Ebenen (9) die Mitte (13) des Käseblocks (2) schneiden, die Länge (10) des einen oder der mehreren sich horizontal erstreckenden Messer (7) die Länge von der Mitte (13) des Käseblocks (2) bis zu einer Ecke (202, 204, 206, 208) des Käseblocks ist, abzüglich des Radius oder des entsprechenden Radius des vertikalen Schafts,
- wenn eine oder keine der vertikalen Ebenen (9) die Mitte (13) des Käseblocks (2) schneidet, die Länge (10) des einen oder der mehreren sich horizontal erstreckenden Messer (7) die Länge von dem Schnittpunkt zwischen zwei vertikalen Ebenen (9), die der Mitte (13) des Käseblocks (2) am nächsten liegen, und bis zu der am nächsten liegenden Ecke (202, 204, 206, 208) des Käseblocks (2), abzüglich des Radius oder des entsprechenden Radius des vertikalen Schafts (5), ist.

3. Schneidvorrichtung (1) nach einem der vorstehenden Ansprüche, wobei die Schneidvorrichtung (1) einen Roboter (18) umfasst, der konfiguriert ist, um den vertikalen Schaft (5) in den mindestens zwei vertikalen Ebenen (9) innerhalb des Käseblocks (2) zu bewegen und zu drehen, wobei der Roboter (18) programmiert ist, um den vertikalen Schaft (5) in einer vorbestimmten Reihenfolge in den mindestens zwei vertikalen Ebenen (9) innerhalb des Käseblocks (2) zu bewegen und zu drehen, bis der Käseblock (2) durch das eine oder die mehreren sich horizontal erstreckenden Messer (7) in Käseschichten getrennt ist.

4. Schneidvorrichtung (1) nach einem der vorstehenden Ansprüche, wobei die Schneidvorrichtung (1) ein Führungselement (16) umfasst, das konfiguriert ist, um auf oder über dem Käseblock (2) angeordnet zu werden, das mindestens einen Schlitz (17) umfasst, durch den sich der vertikale Schaft (5) erstreckt und in dem sich der vertikale Schaft (5) bewegen kann, wobei die Form und die Abmessungen des Schlitzes (17) die Bewegung des vertikalen Schafts (5) in den vertikalen Ebenen (9) innerhalb des Käseblocks (2) bestimmen.

5. Schneidvorrichtung (1) nach einem der vorstehenden Ansprüche, wobei die Schneidvorrichtung (1) mehr als ein sich horizontal erstreckendes Messer (7), vorzugsweise zwei, drei, vier, fünf oder sogar sechs sich horizontal erstreckende Messer (7), umfasst, um den Käseblock in mehr als einer horizontalen Ebene (8) zu schneiden.

6. Schneidvorrichtung (1) nach einem der vorstehenden Ansprüche, wobei sich die mehr als ein sich horizontal erstreckenden Messer (7) von dem vertikalen Schaft (5) in einer identischen Richtung erstrecken.

7. Schneidvorrichtung nach einem der vorstehenden Ansprüche, wobei der Behälter ein Einzelhandelsbehälter ist.

8. Schneidvorrichtung nach einem der vorstehenden Ansprüche, wobei die Schneidvorrichtung weiter einen Sensor (19) umfasst, der konfiguriert ist, um einen Abstand (d) zu bestimmen, der entweder eine direkte Bestimmung der Höhe des Käseblocks (2) ist oder bei einer Bestimmung dieser verwendet wird.

9. Schneidvorrichtung nach Anspruch 8, wobei die Schneidvorrichtung konfiguriert ist, um auf der Grundlage einer vorausgewählten Anzahl von Schichten, die durch das horizontale Schneiden bereitgestellt werden sollen, die Dicke jeder dieser Schichten zu bestimmen, die eine vorbestimmte Dicke aufweisen, wie beispielsweise eine ähnliche oder sogar im Wesentlichen gleiche Dicke, wobei die Dicke vorzugsweise auf der Grundlage der Höhe des Käseblocks (2) geteilt durch die vorausgewählte Anzahl von Schichten bestimmt wird.

10. Verfahren zum horizontalen Schneiden eines würfelförmigen oder quaderförmigen Käseblocks (2), der in einem an der Oberseite (4) offenen Behälter (3) enthalten ist, unter Verwendung einer Schneidvorrichtung (1) nach einem der Ansprüche 1 - 6 auf der Grundlage eines vorausgewählten vertikalen Schnittmusters des Käseblocks (2), wobei das vertikale Schnittmuster als die Anordnung von vertikalen Ebenen (9) definiert ist, die innerhalb des Käseblocks (2) nach einem vertikalen Schneiden des Käseblocks (2) bereitgestellt sind, wobei das vertikale Schnittmuster mindestens zwei vertikale Ebenen (9) umfasst, wobei
- mindestens eine vertikale Ebene (9a) sich entlang der Breite (11) des Käseblocks (2) erstreckt,
- mindestens eine vertikale Ebene (9b) sich entlang der Länge (12) des Käseblocks (2) erstreckt,
- die mindestens eine vertikale Ebene (9a), die sich entlang der Breite (11) des Käseblocks (2) erstreckt, die mindestens die vertikale Ebene (9b), die sich entlang der Länge (12) des Käseblocks (2) erstreckt, schneidet und senkrecht zu ihr steht,
wobei das Verfahren umfasst:
- Einführen der Schneidvorrichtung (1) in den Käseblock (2), sodass der vertikale Schaft (5) und das eine oder die mehreren sich horizontal erstreckenden Messer (7) während des Einführens in mindestens einer vertikalen Ebene (9) innerhalb des Käseblocks (2) geführt werden, bis das eine oder die mehreren sich horizontal erstreckenden Messer (7) an der zu schneidenden horizontalen Ebene (8) ankommen,
- Bewegen und Drehen des vertikalen Schafts (5) in einer vorbestimmten Reihenfolge in den mindestens zwei vertikalen Ebenen (9), wodurch auch das eine oder die mehreren sich horizontal erstreckenden Messer (7) in einer vorbestimmten Reihenfolge bewegt und gedreht werden, bis das eine oder die mehreren sich horizontal erstreckenden Messer (7) den Käseblock (2) horizontal in zwei oder mehrere Käseschichten geschnitten haben.

11. Verfahren nach Anspruch 10, wobei die vorbestimmte Reihenfolge so bestimmt ist, dass ein distales Ende (15) des einen oder der mehreren sich horizontal erstreckenden Messer (7) mindestens dem Umfang des Käseblocks (2) folgt, während sich der vertikale Schaft (5) innerhalb der mindestens zwei vertikalen Ebenen (9) hin und her bewegt und dreht, wodurch ein horizontales Schneiden des Käseblocks (2) bereitgestellt wird, wodurch der Käseblock (2) in zwei oder mehr Käseschichten getrennt wird.

12. Verfahren nach Anspruch 10 oder 11, wobei das Verfahren weiter den Schritt des vertikalen Schneidens des Käseblocks (2) vor oder nach dem Schritt des horizontalen Schneidens des Käseblocks (2) umfasst.

13. Verfahren nach einem der Ansprüche 10 - 12, wobei das vertikale Schnittmuster so ausgewählt ist, dass das vertikale Schneiden des Käseblocks (2) den Käseblock in gleichgroße Käseabschnitte trennt.

14. Verfahren nach einem der Ansprüche 10 - 13, wobei das Verfahren weiter das Bestimmen der Höhe des Käseblocks (2), vorzugsweise unter Verwendung eines Sensors (9), umfasst.

15. Verfahren nach Anspruch 14, wobei das Verfahren weiter umfasst, auf der Grundlage einer vorausgewählten Anzahl von Schichten, die durch das horizontale Schneiden bereitgestellt werden sollen, die Dicke jeder dieser Schichten zu bestimmen, die eine vorbestimmte Dicke aufweisen, wie beispielsweise eine ähnliche oder sogar im Wesentlichen gleiche Dicke, wobei die Dicke vorzugsweise auf der Grundlage der Höhe des Käseblocks (2) geteilt durch die vorausgewählte Anzahl von Schichten bestimmt wird.

16. Verfahren nach einem der Ansprüche 10 - 15, wobei jedes horizontale Schneiden in eine Schicht nacheinander schichtweise durchgeführt wird, wobei beim Schneiden einer horizontalen Schicht der vertikale Schaft (5) um einen Betrag der Dicke der Schicht nach oben oder nach unten bewegt wird.

17. Verfahren zur Herstellung eines vertikal und horizontal geschnittenen Käseblocks (2) in einem an der Oberseite (4) offenen Behälter (3), wobei das Verfahren umfasst:
a) Einfüllen eines Produkts in einen sterilisierten, mit Gleitmittel besprühten Behälter,
b) Koagulieren des Produkts zu einem Käseblock (2) und
c) Schneiden des Käseblocks (2) nach dem Verfahren nach einem der Ansprüche 10 - 16.

18. Verfahren nach einem der vorstehenden Ansprüche 10 - 17, wobei der Behälter ein Einzelhandelsbehälter ist.

## Revendications

1. Dispositif de coupe (1) configuré pour couper horizontalement un bloc de fromage (2) contenu dans un récipient (3) qui est ouvert à son sommet (4), le dispositif de coupe (1) comprenant :
- un arbre vertical allongé (5) configuré pour être inséré partiellement dans le bloc de fromage (2) et étant configuré pour tourner à 360 degrés autour de son axe longitudinal (6) ;
- un ou plusieurs couteaux (7) s'étendant horizontalement, s'étendant à partir de l'arbre vertical (5), configurés pour être entièrement insérés dans le bloc de fromage (2) et étant configurés pour couper le bloc de fromage (2) dans un ou plusieurs plans horizontaux (8) ;
**caractérisé en ce que** le dispositif de coupe est configuré pour couper horizontalement un bloc cubique ou cuboïde de fromage contenu dans un récipient et le dispositif de coupe (1) est en outre configuré pour déplacer et faire tourner l'arbre vertical (5) dans au moins deux plans verticaux (9) à l'intérieur du bloc de fromage (2), en ainsi déplaçant et faisant tourner dans un plan horizontal (8) à l'intérieur du bloc de fromage (2) chaque couteau (7) s'étendant horizontalement, pour produire une coupe horizontale du bloc de fromage (2).

2. Dispositif de coupe (1) selon la revendication 1, dans lequel lesdits un ou plusieurs couteaux (7) s'étendant horizontalement ont une longueur (10) qui est fonction d'un schéma présélectionné de coupe verticale du bloc de fromage (2), le schéma de coupe verticale étant défini comme la disposition de plans verticaux (9) produits à l'intérieur du bloc de fromage (2) après une coupe verticale du bloc de fromage (2), le schéma de coupe verticale comprend au moins deux plans verticaux (9), dans lesquels
- au moins un plan vertical (9a) s'étend sur la largeur (11) du bloc de fromage (2),
- au moins un plan vertical (9b) s'étend sur la longueur (12) du bloc de fromage (2),
- ledit au moins un plan vertical (9a) s'étendant sur la largeur (11) du bloc de fromage (2) coupe et est perpendiculaire audit au moins le plan vertical (9b) s'étendant sur la longueur (12) du bloc de fromage (2),
la longueur (10) desdits un ou plusieurs couteaux (7) s'étendant horizontalement étant fonction du schéma présélectionné de coupe verticale, de sorte que :
- lorsque deux plans verticaux (9) croisent le centre (13) du bloc de fromage (2), la longueur (10) desdits un ou plusieurs couteaux (7) s'étendant horizontalement est celle de la longueur s'étendant du centre (13) du bloc de fromage (2) à un coin (202, 204, 206, 208) du bloc de fromage, moins le rayon ou rayon moyen de l'arbre vertical,
- lorsqu'un ou aucun des plans verticaux (9) croise le centre (13) du bloc de fromage (2), la longueur (10) desdits un ou plusieurs couteaux (7) s'étendant horizontalement est celle de la longueur s'étendant du point d'intersection entre les deux plans verticaux (9) les plus proches du centre (13) du bloc de fromage (2), et au coin (202, 204, 206, 208) le plus proche du bloc de fromage (2), moins le rayon ou rayon moyen de l'arbre vertical (5).

3. Dispositif de coupe (1) selon l'une quelconque des revendications précédentes, dans lequel le dispositif de coupe (1) comprend un robot (18) configuré pour déplacer et faire tourner l'arbre vertical (5) dans lesdits au moins deux plans verticaux (9) à l'intérieur du bloc de fromage (2), le robot (18) étant programmé pour déplacer et faire tourner l'arbre vertical (5) en une séquence préétablie dans lesdits au moins deux plans verticaux (9) à l'intérieur du bloc de fromage (2), jusqu'à ce que le bloc de fromage (2) soit fractionné en couches de fromage par lesdits un ou plusieurs couteaux (7) s'étendant horizontalement.

4. Dispositif de coupe (1) selon l'une quelconque des revendications précédentes, dans lequel le dispositif de coupe (1) comprend un élément de guidage (16) configuré pour être disposé sur le ou au-dessus du bloc de fromage (2), comprenant au moins une fente (17) à travers laquelle s'étend l'arbre vertical (5) et dans laquelle l'arbre vertical (5) peut se mouvoir, la forme et les dimensions de la fente (17) déterminant le mouvement de l'arbre vertical (5) dans les plans verticaux (9) à l'intérieur du bloc de fromage (2).

5. Dispositif de coupe (1) selon l'une quelconque des revendications précédentes, dans lequel le dispositif de coupe (1) comprend plus d'un couteau (7) s'étendant horizontalement, de préférence deux, trois, quatre, cinq ou même six couteaux (7) s'étendant horizontalement, pour couper le bloc de fromage dans plus d'un plan horizontal (8).

6. Dispositif de coupe (1) selon l'une quelconque des revendications précédentes, dans lequel lesdits plus d'un couteau (7) s'étendant horizontalement s'étendent à partir de l'arbre vertical (5) dans une direction identique.

7. Dispositif de coupe selon l'une quelconque des revendications précédentes, dans lequel le récipient est un récipient destiné à la vente au détail.

8. Dispositif de coupe selon l'une quelconque des revendications précédentes, dans lequel le dispositif de coupe comprend en outre un capteur (19) configuré pour déterminer une distance (d) qui est soit une détermination directe de, soit utilisée dans une détermination de la hauteur du bloc de fromage (2).

9. Dispositif de coupe selon la revendication 8, dans lequel le dispositif de coupe est configuré pour, sur la base du nombre présélectionné de couches devant être produites par la coupe horizontale, déterminer l'épaisseur de chacune desdites couches destinées à avoir une épaisseur préétablie, telle qu'une épaisseur similaire ou même sensiblement égale, l'épaisseur est de préférence déterminée sur la base de la hauteur du bloc de fromage (2) divisée par le nombre présélectionné de couches.

10. Procédé pour couper horizontalement un bloc cubique ou cuboïde de fromage (2) contenu dans un récipient (3) qui est ouvert à son sommet (4), en utilisant un dispositif de coupe (1) selon l'une quelconque des revendications 1-6, sur la base d'un schéma présélectionné de coupe verticale du bloc de fromage (2), le schéma de coupe verticale étant défini comme la disposition de plans verticaux (9) produits à l'intérieur du bloc de fromage (2) après une coupe verticale du bloc de fromage (2), le schéma de coupe verticale comprend au moins deux plans verticaux (9), dans lesquels
- au moins un plan vertical (9a) s'étend sur la largeur (11) du bloc de fromage (2),
- au moins un plan vertical (9b) s'étend sur la longueur (12) du bloc de fromage (2),
- ledit au moins un plan vertical (9a) s'étendant sur la largeur (11) du bloc de fromage (2) coupe et est perpendiculaire audit au moins le plan vertical (9b) s'étendant sur la longueur (12) du bloc de fromage (2),
le procédé comprenant les étapes consistant à :
- insérer le dispositif de coupe (1) dans le bloc de fromage (2), de sorte que l'arbre vertical (5) et lesdits un ou plusieurs couteaux (7) s'étendant horizontalement sont guidés dans au moins un plan vertical (9) à l'intérieur du bloc de fromage (2) pendant l'insertion, jusqu'à ce que lesdits un ou plusieurs couteaux (7) s'étendant horizontalement arrivent au niveau du plan horizontal (8) destiné à être coupé,
- déplacer et faire tourner l'arbre vertical (5) en une séquence préétablie dans lesdits au moins deux plans verticaux (9), en ainsi déplaçant et faisant tourner également en une séquence préétablie lesdits un ou plusieurs couteaux (7) s'étendant horizontalement, jusqu'à ce que lesdits un ou plusieurs couteaux (7) s'étendant horizontalement aient coupé horizontalement le bloc de fromage (2) en deux ou plus de deux couches de fromage.

11. Procédé selon la revendication 10, dans lequel la séquence préétablie est déterminée de telle façon qu'une extrémité distale (15) desdits un ou plusieurs couteaux (7) s'étendant horizontalement au moins suive la circonférence du bloc de fromage (2), tandis que l'arbre vertical (5) se déplace en avant et en arrière et tourne à l'intérieur desdits au moins deux plans verticaux (9), en produisant ainsi une coupe horizontale du bloc de fromage (2), fractionnant le bloc de fromage (2) en deux ou plus de deux couches de fromage.

12. Procédé selon la revendication 10 ou 11, dans lequel le procédé comprend en outre l'étape consistant à couper verticalement le bloc de fromage (2) avant ou après l'étape consistant à couper horizontalement le bloc de fromage (2).

13. Procédé selon l'une quelconque des revendications 10-12, dans lequel le schéma de coupe verticale est choisi de telle façon que la coupe verticale du bloc de fromage (2) fractionne le bloc de fromage en sections de fromage de même taille.

14. Procédé selon l'une quelconque des revendications 10-13, dans lequel the procédé comprend en outre la détermination, de préférence à l'aide d'un capteur (9), de la hauteur du bloc de fromage (2).

15. Procédé selon la revendication 14, dans lequel le procédé comprend en outre le fait de déterminer, sur la base d'un nombre présélectionné de couches à produire par la coupe horizontale, l'épaisseur de chacune desdites couches afin qu'elle soit d'une épaisseur préétablie, telle qu'une épaisseur similaire ou même sensiblement égale, l'épaisseur est de préférence déterminée sur la base de la hauteur du bloc de fromage (2) divisée par le nombre présélectionné de couches.

16. Procédé selon l'une quelconque des revendications 10-15, dans lequel ladite chaque coupe horizontale en une couche est effectuée consécutivement une couche à la fois, lorsqu'une couche horizontale est coupée, l'arbre vertical (5) est déplacé vers le haut ou vers le bas d'une quantité correspondant à l'épaisseur de la couche.

17. Procédé de production d'un bloc de fromage (2) coupé verticalement et horizontalement dans un récipient (3) qui est ouvert à son sommet (4), le procédé comprenant les étapes consistant à :
a) introduire un produit dans un récipient stérilisé ayant reçu une pulvérisation avec un aérosol lubrifiant,
b) coaguler le produit en un bloc de fromage (2) et
c) couper le bloc de fromage (2) conformément au procédé selon l'une quelconque des revendications 10-16.

18. Procédé selon l'une quelconque des revendications précédentes 10-17, dans lequel le récipient est un récipient destiné à la vente au détail.
